# EUROPÄISCHE PATENTSCHRIFT

(11) **EP 3 118 339 B1**
(45) Veröffentlichungstag und Bekanntmachung des Hinweises auf die Patenterteilung: **18.07.2018**
(21) Anmeldenummer: 16001415.5
(22) Anmeldetag: 23.06.2016
(51) Int. Cl.: C22C 27/04, C22C 32/00

(54) **MOLYBDÄNLEGIERUNG, ELEKTRODE UMFASSEND EINE MOLYBDÄNLEGIERUNG, SOWIE VERWENDUNG EINER ELEKTRODE**
MOLYBDENUM ALLOY, ELECTRODE COMPRISING A MOLYBDENUM ALLOY, AND USE OF AN ELECTRODE
ALLIAGE DE MOLYBDENE, ELECTRODE COMPRENANT UN ALLIAGE DE MOLYBDENE ET UTILISATION D'UNE ELECTRODE

(30) Priorität: 17.07.2015 DE 102015009322
(43) Veröffentlichungstag der Anmeldung: 18.01.2017
(73) Patentinhaber: Gesellschaft für Wolfram Industrie mbH, 83278 Traunstein (DE)
(72) Erfinder: Gobran, Hany, 85757 Karlsfeld (DE)
(74) Vertreter: Roos, Peter

(56) Entgegenhaltungen:
- EP-A1- 0 512 632
- WO-A1-98/38841
- DE-C1- 3 835 328
- JP-A- H09 239 559
- JP-A- H10 314 957

## Beschreibung

Die vorliegende Erfindung betrifft eine Molybdänlegierung, eine Elektrode umfassend eine Molybdänlegierung, sowie eine Verwendung einer derartigen Elektrode.

Beim Lichtbogenschweißen wird ein elektrischer Lichtbogen zwischen einer Elektrode und einem Werkstück als Wärmequelle zum Schweißen genutzt. Durch die extrem hohe Temperatur des Lichtbogens wird der Werkstoff an der Schweißstelle aufgeschmolzen.

Gemäß des Stands der Technik wird beim Lichtbogenschweißen, sei es z. B. beim manuellen Lichtbogenschweißen (z. B. Lichtbogenhandschweißen) oder z. B. beim industriellen bzw. automatisierten Lichtbogenschweißen, entweder eine als Zusatzwerkstoff "abschmelzende Elektrode", oder eine "nicht-abschmelzende" Elektrode verwendet.

"Abschmelzende Elektroden" werden typischerweise als umhüllte Stabelektroden aus unlegierten Stählen hergestellt. Diese Elektroden können beim Abschmelzen Gase und Schweißschlacken entwickeln, wobei die z. B. aus der Umhüllung freigesetzten Gase den Lichtbogen vorteilhaft stabilisieren und das Schweißbad vor einer Oxidation durch Luftsauerstoff abschirmen können. Insofern kann hierbei auch ohne extern zugegebenes Schutzgas geschweißt werden (z. B. Metall-Lichtbogenschweißen ohne Gasschutz).

Bei "nicht-abschmelzende Elektroden" muss ein Zusatzwerkstoff, falls erforderlich, separat zugeführt werden. Eine separate Zugabe eines solchen Schweißzusatzes ist jedoch insofern vorteilhaft, als diese Zugabe (Materialart und Materialmenge) somit von der Erzeugung des Lichtbogens entkoppelt ist. Zur Erzielung einer hohen Schweißnahtgüte muss außerdem Schutzgas (Inertgas) zugegeben werden, um eine Oxidation durch Luftsauerstoff zu verhindern.

In vielen Anwendungsfällen, sei es in der Industrie oder im Handwerk, kommt ein Lichtbogenschweißen mit "abschmelzender Elektrode" nicht in Frage, beispielsweise wenn der von der Elektrode abschmelzende Zusatzstoff ungeeignet bzw. unerwünscht ist.

Daher muss in diesen Fällen auf das Lichtbogenschweißen mit "nicht-abschmelzender Elektrode" zurückgegriffen werden, wobei hierbei im Stand der Technik ausschließlich Elektroden aus Wolfram oder Wolframlegierungen mit einem kleinen Anteil (typisch etwa 1 bis 2 Gew.-%) einer Dotierung eingesetzt werden. Bei der Dotierung handelt es sich z. B. um Thoriumoxid oder Lanthanoxid oder Ceroxid oder Zirkonoxid.

Dieses in der Praxis höchsten Anforderungen gerecht werdende Schweißverfahren wird daher auch als WIG-Schweißen ("Wolfram-Inertgasschweißen") bezeichnet. Beim WIG-Schweißen gibt es im Hinblick auf das Erfordernis eines typische Lichtbogentemperaturen übersteigenden Schmelzpunktes des Elektrodenmaterials (sowie des Erfordernisses einer ausreichenden elektrischen Leitfähigkeit) im Stand der Technik keine Alternative zu Wolfram (Schmelzpunkt 3422 °C) bzw. einer im Wesentlichen aus Wolfram bestehenden Legierung.

Nachteilig sind jedoch die vergleichsweise hohen Kosten von Wolfram bzw. einer daraus hergestellten Elektrode.

Vor diesem Hintergrund ist es eine Aufgabe der vorliegenden Erfindung, einen kostengünstigeren Weg zur Bewerkstelligung von qualitativ hochwertigen Lichtbogenschweißungen, insbesondere gemäß eines WIG-Schweißprozesses aufzuzeigen.

Gemäß eines erstens Aspekts der Erfindung wird ein hierfür geeignetes Elektrodenmaterial in Form einer Molybdänlegierung vorgeschlagen, bestehend aus:
- 1 bis 8 Gew.-% Oxide, ausgewählt aus der Gruppe bestehend aus Lanthanoxid, Thoriumoxid, Ceroxid, Yttriumoxid, Zirkonoxid und Terbiumoxid,
- 1 bis 20 Gew.-% Wolfram,
- 72 bis 98 Gew.-% Molybdän,
- optional einen oder mehrere weitere Zusätze oder Verunreinigungen von allenfalls 1 Gew.-%.

Aufgrund der ganz überwiegenden Verwendung von Molybdän in dieser Legierung ist diese um etwa 40% kostengünstiger herstellbar als die bislang bekannten Wolframlegierungen.

Wenngleich Molybdän mit einem Schmelzpunkt von 2623 °C auf den ersten Blick wohl als definitiv "ungeeignet" für eine Verwendung als Elektrodenmaterial beim WIG-Schweißen bzw. als Ersatz für die im WIG-Schweißverfahren gut etablierten WIG-Elektrodenmaterialien erachtet werden muss, so hat sich überraschenderweise herausgestellt, dass die erfindungsgemäße Legierung mit der angegebenen Zusammensetzung zumindest dann gut einsetzbar ist, wenn das Erfordernis einer möglichst langen Elektrodenlebensdauer bzw. eines möglichst geringen Elektrodenverschleißes nicht an allererster Stelle steht. Des Weiteren hat sich herausgestellt, dass beim Einsatz der erfindungsgemäßen Legierung, insbesondere in einem WIG-Schweißprozess, mit Hilfe einer entsprechenden Schweißverfahrensführung und Elektrodenbestromung die Lichtbogentemperatur vorteilhaft nennenswert reduziert werden kann, ohne damit die Schweißqualität zu beeinträchtigen.

Die erfindungsgemäße Molybdänlegierung kann vorteilhaft unter Einsatz gut etablierter Sinterverfahren hergestellt werden, beispielsweise indem die erforderlichen Komponenten in Pulverform miteinander gemischt, gepresst und schließlich gesintert werden, wobei nachfolgend bevorzugt noch z. B. eine mechanische Nachbearbeitung und/oder z. B. eine Rekristallisationsbehandlung durchgeführt werden kann. Zur Herstellung einer solchen gesinterten Legierung bzw. einer wenigstens teilweise daraus bestehenden Elektrode kann z. B. vorteilhaft auf den allgemeinen Stand der Technik zur Fertigung gesinterter Wolframprodukte zurückgegriffen werden (vgl. z. B. DE 38 35 328 C1).

Gemäß eines derartigen bekannten Press- und Sinterverfahrens kann auch die erfindungsgemäße Molybdänlegierung (bzw. Elektrode) hergestellt werden.

In einer besonders vorteilhaften Ausführungsform enthält die Molybdänlegierung:
- 1 bis 8 Gew.-% Lanthanoxid und/oder Thoriumoxid und/oder Ceroxid,
- 0,05 bis 0,5 Gew.-% Yttriumoxid,
- 0,02 bis 1,5 Gew.-% Zirkonoxid,
- 0,01 bis 0,5 Gew.-% Terbiumoxid,
- 1 bis 20 Gew.-% Wolfram,
- 72 bis 97,9 Gew.-% Molybdän.

Gemäß einer diesbezüglich ersten bevorzugten Ausführungsvariante enthält die Molybdänlegierung:
- 1 bis 5 Gew.-% Lanthanoxid
- 0,05 bis 0,5 Gew.-% Yttriumoxid,
- 0,02 bis 0,5 Gew.-% Zirkonoxid,
- 0,01 bis 0,5 Gew.-% Terbiumoxid,
- 5 bis 15 Gew.-% Wolfram,
- 78,5 bis 93,9 Gew.-% Molybdän.

Gemäß einer anderen bevorzugten Ausführungsvariante enthält die Molybdänlegierung:
- 1 bis 6 Gew.-% Ceroxid,
- 0,05 bis 0,5 Gew.-% Yttriumoxid,
- 0,02 bis 0,5 Gew.-% Zirkonoxid,
- 0,01 bis 0,5 Gew.-% Terbiumoxid,
- 5 bis 15 Gew.-% Wolfram,
- 77,5 bis 93,9 Gew.-% Molybdän.

Gemäß einer anderen bevorzugten Ausführungsvariante enthält die Molybdänlegierung:
- 2 bis 6 Gew.-% Thoriumoxid,
- 10 bis 20 Gew.-% Wolfram,
- 74 bis 88 Gew.-% Molybdän.

Gemäß einer anderen bevorzugten Ausführungsvariante enthält die Molybdänlegierung:
- 0,5 bis 3 Gew.-% Terbiumoxid,
- 15 bis 20 Gew.-% Wolfram,
- 77 bis 84,5 Gew.-% Molybdän.

Bei den im Rahmen der Erfindung als Legierungskomponenten vorgesehenen Oxiden kann es sich insbesondere und bevorzugt jeweils um die nachfolgend (in Klammern) angegebenen speziellen Oxide handeln: Lanthanoxid (La₂O₃), Thoriumoxid (ThO₂), Ceroxid (CeO₂), Yttriumoxid (Y₂O₃), Zirkonoxid (ZrO₂), Terbiumoxid (Tb₂O₃).

Gemäß eines weiteren Aspekts der Erfindung wird eine Elektrode zum Lichtbogenschweißen, insbesondere WIG-Schweißen, beispielsweise in Form eines langgestreckten Stiftes, vorgeschlagen, welche die hier beschriebene Molybdänlegierung umfasst oder aus einer solchen besteht.

Die Brauchbarkeit einer derartigen Elektrode zum WIG-Schweißen wurde durch verschiedene Versuchsreihen bestätigt.

In der nachfolgenden Tabelle 1 ist beispielhaft das Ergebnis einer Versuchsreihe angegeben, in welcher fünf sich im Anteil von Lanthanoxid (hier: La₂O₃) voneinander unterscheidende Molybdänlegierungen untersucht wurden:

**Tabelle 1**

| Beispiel: | La₂O₃ [Gew.-%] | Y₂O₃ [Gew.-%] | ZrO₂ [Gew.-%] | Tb₂O₃ [Gew.-%] | W [Gew.-%] | Mo [Gew.-%] | Ausschuss [%] | Ausfälle [%] | Abtrag [mg] |
|---|---|---|---|---|---|---|---|---|---|
| 1 | 2,00 | 0,10 | 0,05 | 0,02 | 10 | 87,83 | 16,00 | 8,8 | 215 |
| 2 | 3,00 | 0,10 | 0,05 | 0,02 | 10 | 86,83 | 20,00 | 2,7 | 148 |
| 3 | 4,00 | 0,10 | 0,05 | 0,02 | 10 | 85,83 | 26,00 | 1,2 | 137 |
| 4 | 5,00 | 0,10 | 0,05 | 0,02 | 10 | 84,83 | 37,00 | 0,9 | 104 |
| 5 | 6,00 | 0,10 | 0,05 | 0,02 | 10 | 83,83 | 57,00 | 0,8 | 116 |

Aus Tabelle 1 ist ersichtlich, dass einerseits hinsichtlich eines niedrigen Materialverlustes während der Produktion, also produktionsbedingten Abfällen, angegeben in der Spalte "Ausschuss", ein eher niedriger Lanthanoxidanteil vorteilhaft ist, andererseits jedoch hinsichtlich der Zündeigenschaften, angegeben in der Spalte "Ausfälle" (als Anzahl der Ausfälle innerhalb von 300 Lichtbogenzündungen) und hinsichtlich des Materialabtrages beim Schweißeinsatz, angegeben in der Spalte "Abtrag" (als Abtrag der Elektrodenspitze nach 30 Zyklen) ein eher hoher Lanthanoxid Anteil vorteilhaft ist.

Die erfindungsgemäße Zusammensetzung löst diesen Zielkonflikt und stellt insofern einen hinsichtlich einer praxisrelevanten "Gesamtbewertung" guten Kompromiss dar.

In der nachfolgenden Tabelle 2 ist, ferner beispielhaft, das Ergebnis einer Versuchsreihe angegeben, in welcher drei sich im Wolframanteil (und dementspechend Molybdänanteil) voneinander unterscheidende Molybdänlegierungen untersucht wurden:

**Tabelle 2**

| Beispiel: | La₂O₃ [Gew.-%] | Y₂O₃ [Gew.-%] | ZrO₂ [Gew.-%] | Tb₂O₃ [Gew.-%] | W [Gew.-%] | Mo [Gew.-%] | Ausschuss [%] | Ausfälle [%] | Abtrag [mg] |
|---|---|---|---|---|---|---|---|---|---|
| 1 | 3,00 | 0,10 | 0,05 | 0,02 | 10 | 86,83 | 20,00 | 2,7 | 148 |
| 2 | 3,00 | 0,10 | 0,05 | 0,02 | 20 | 76,83 | 42,00 | 5,1 | 123 |
| 3 | 3,00 | 0,10 | 0,05 | 0,02 | 30 | 66,83 | 53,00 | 5,5 | 108 |

Aus Tabelle 2 ist ersichtlich, dass einerseits hinsichtlich eines niedrigen Materialverlustes während der Produktion (siehe Spalte "Ausschuss") und hinsichtlich der Zündeigenschaften (siehe Spalte "Ausfälle") ein niedriger Wolframanteil vorteilhaft ist, andererseits jedoch hinsichtlich eines niedrigen Materialabtrages (siehe Spalte "Abtrag") ein eher hoher Wolframanteil vorteilhaft ist.

Auch hinsichtlich des Wolframanteils bietet die erfindungsgemäße Molybdänlegierung einen hinsichtlich der praxisrelevanten Gesamtbewertung guten Kompromiss.

Im einfachsten Fall besteht die erfindungsgemäße Elektrode insgesamt aus einer Molybdänlegierung der hier vorgeschlagenen Art. Derartige Elektroden können z. B. in Form von zylindrischen Stäben als "WIG-Elektroden" (bzw. genaugenommen als kostengünstiger Ersatz für derartige WIG-Elektroden) Verwendung finden und können in diesem Fall z. B. einen in der Norm ISO 6848, Tabelle 2, als Standard spezifizierten Durchmesser und/oder eine in dieser Norm, Tabelle 3, als Standard definierte Länge besitzen.

In einer anderen Ausführungsform umfasst die Elektrode einen ersten Elektrodenabschnitt aus einer Molybdänlegierung der hier beschriebenen Art und wenigstens einen weiteren Elektrodenabschnitt aus einem anderen Material, insbesondere einen zur verbesserten Wärmeableitung und/oder zum elektrischen Anschluss der Elektrode vorgesehenen Elektrodenabschnitt, der sich an dem im Einsatz dem Lichtbogen abgewandten Ende der Elektrode befindet und der aus einem anderen Material (z. B. Kupfer oder Kupferlegierung) gebildet ist. An einer solchen, aus verschiedenen Materialabschnitten zusammengesetzten Elektrode kann der erste Elektrodenabschnitt (Molybdänlegierung) fest mit dem wenigstens einen weiteren Elektrodenabschnitt (z. B. elektrischer Anschlussabschnitt) verbunden sein.

Gemäß eines weiteren Aspekts der Erfindung wird die Verwendung einer Elektrode der hier beschriebenen Art bzw. einer Elektrode umfassend eine Molybdänlegierung der hier beschriebenen Art zum Lichtbogenschweißen, insbesondere als eine "nicht-abschmelzende" Elektrode zum WIG-Schweißen, vorgeschlagen.

In einer bevorzugten Ausführungsform dieser Verwendung erfolgt das Lichtbogenschweißen unter einer Schutzgasatmosphäre. Bei dem Schutzgas kann es sich insbesondere z. B. um Kohlendioxid, ein Edelgas (z. B. Argon, Helium etc.), oder auch um ein Gemisch der vorgenannten Gase handeln. In einer Ausführungsform wird als Schutzgas Argon mit einer Reinheit von mindestens 99,95% eingesetzt. In einer anderen Ausführungsform wird als Schutzgas Argon mit einem Zusatz von Helium verwendet. In einer anderen Ausführungsform wird Argon mit einem Zusatz von Wasserstoff verwendet.

Das Schutzgas wird bevorzugt mit einer Zufuhrrate im Bereich von 5 bis 15 l/min zugeführt.

Die Elektrode ragt bevorzugt nicht mehr als 5 mm aus einer zur Zufuhr des Schutzgases verwendeten Düse heraus.

Als besonders vorteilhaft hat sich eine Verwendung zum Lichtbogenschweißen mit Gleichstrom herausgestellt, wobei die Elektrode insbesondere als Kathode verwendet werden kann. Damit lassen sich vorteilhaft deutlich verlängerte Lebensdauern bzw. ein deutlich verringerter Verschleiß erzielen.

Im Falle einer Verwendung der Elektrode als Kathode wird bevorzugt eine Stromstärke im Bereich von 60 bis 500 A verwendet, im Falle einer Verwendung der Elektrode als Anode bevorzugt eine Stromstärke im Bereich von 10 bis 60 A. Generell bevorzugt liegt eine verwendete Stromdichte (gemessen im Elektrodenschaftbereich, also etwa unmittelbar vor der Elektrodenspitze) im Falle der Verwendung der Elektrode als Kathode im Bereich von 10 bis 60 A/mm², und im Falle der Verwendung der Elektrode als Anode im Bereich von 2 bis 8 A/mm².

Ferner ist bei der erfindungsgemäßen Verwendung bevorzugt ein manuelles Lichtbogenschweißen, insbesondere WIG-Schweißen (im Gegensatz zu einem automatisierten, z. B. mittels eines Roboters bewerkstelligten Lichtbogenschweißens, insbesondere WIG-Schweißens) vorgesehen. Vorteilhaft bedeutet der im Vergleich zu herkömmlichen WIG-Elektroden nicht zu vernachlässigende Verschleiß der erfindungsgemäßen Elektrode beim manuellen Schweißen keinen gravierenden Nachteil (insbesondere weil die Standzeiten einer Elektrode beim manuellen Schweißen ohnehin tendenziell länger sind).

Im Hinblick auf den Verschleiß sei angemerkt, dass die erfindungsgemäße Elektrode im Rahmen der Verwendung beim Lichtbogenschweißen nach einem gewissen Ausmaß an Verschleiß an der Elektrodenspitze ohne weiteres wieder "angespitzt" werden kann, etwa durch Schleifen, um sodann weiterverwendet zu werden. In einer bevorzugten Ausführungsform ist die Elektrodenspitze in Verwendungssituation mit einem Winkel im Bereich von 25 bis 50° bezüglich einer Längsrichtung der Elektrode angespitzt. Der Begriff "angespitzt" soll hier jedoch insbesondere auch den im Allgemeinen bevorzugten Fall umfassen, dass die Spitze an ihrem Ende abgestumpft ist. Eine solche Abstumpfung kann z. B. mit einem Abstumpfungsradius vorgesehen sein, der im Bereich des 0,05-fachen bis 0,1-fachen eines Elektrodendurchmessers liegt.

Ein Abstand zwischen der Elektrode und dem zu schweißenden Werkstück beträgt bevorzugt mindestens 2 mm, insbesondere mindestens 4 mm, andererseits bevorzugt höchstens 8 mm, insbesondere höchstens 6 mm. Generell bevorzugt liegt dieser Abstand in einem Bereich von 75 bis 125% eines Elektrodendurchmessers.

In einer Ausführungsform ist die Verwendung zum Lichtbogenschweißen eines Werkstoffes aus Stahl (legiert oder unlegiert) vorgesehen.

Bei der Verwendung kann jedoch als Werkstoff z. B. auch ein anderer Werkstoff, insbesondere z. B. Aluminium oder eine Aluminiumlegierung, oder auch z. B. Magnesium oder eine Magnesiumlegierung, oder schließlich z. B. auch Titan oder eine Titanlegierung vorgesehen sein.

Gegebenenfalls kann bei der Verwendung eine separate Zugabe eines Schweißzusatzes erfolgen.

Die Erfindung wird nachfolgend anhand von Ausführungsbeispielen mit Bezug auf die beigefügten Zeichnungen weiter beschrieben. Es stellen dar:
- Fig. 1: ein Querschliffbild einer aus einer Molybdänlegierung hergestellten Elektrode gemäß eines Ausführungsbeispiels,
- Fig. 2: ein Längsschliffbild der aus der Molybdänlegierung hergestellten Elektrode gemäß des Ausführungsbeispiels,
- Fig. 3: eine stiftförmig formgestaltete, aus einer Molybdänlegierung hergestellte Elektrode gemäß eines Ausführungsbeispiels,
- Fig. 4: eine Darstellung zur Veranschaulichung einer Verwendung einer Elektrode beim WIG-Schweißen.

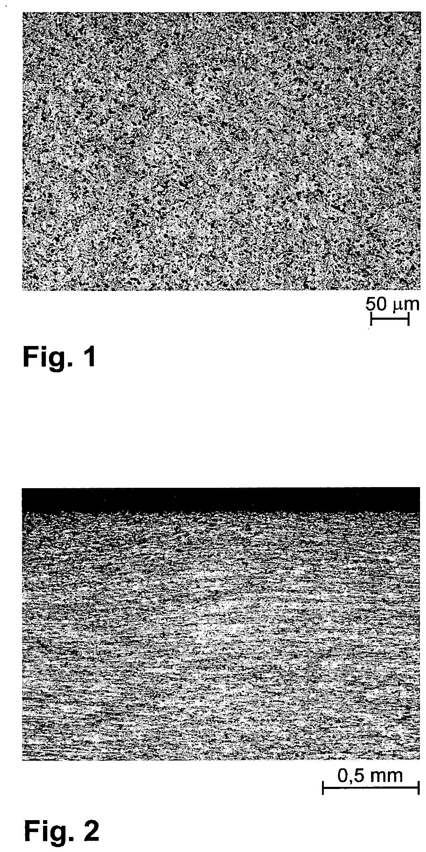

Die Fig. 1 und 2 zeigen ein Querschliffbild (Fig. 1) und ein Längsschliffbild (Fig. 2) einer langgestreckt stiftförmig formgestalteten und von einer Molybdänlegierung gebildeten Elektrode.

Die Legierung enthält in diesem Beispiel: 3 Gew.-% Lanthanoxid (La₂O₃), 0,1 Gew.-% Yttriumoxid (Y₂O₃), 0,05 Gew.-% Zirkonoxid (ZrO₂), 0,02 Gew.-% Terbiumoxid (Tb₂O₃), 10 Gew.-% Wolfram (W) und 86,8 Gew.-% Molybdän (Mo).

Zur Herstellung der Elektrode wurden zunächst die vorstehend genannten Legierungskomponenten jeweils in Pulverform (Mittlere Teilchengrößen bevorzugt jeweils im Bereich von 1,5 bis 4,5 µm) bereitgestellt und entsprechend der angegebenen Zusammensetzung miteinander vermischt.

Sodann wurde die Pulvermischung durch Druckanwendung (Druck bevorzugt mehr als 2000 bar, bevorzugt weniger als 5000 bar) zu einem zylindrischen Stab gepresst, um einen Grünling mit einem Durchmesser von ca. 12 mm zu erhalten.

Sodann wurde der Grünling durch Anwendung erhöhten Druckes und erhöhter Temperatur gesintert und anschließend durch ein Rundkneten unter Querschnittsverringerung verlängert.

Nach einem oberflächlichen Schleifen des auf einen Durchmesser von etwa 3 mm rundgekneteten Sinterproduktes wurde dieses schließlich durch Schneiden in eine Mehrzahl einzelner Elektroden vereinzelt.

Wie aus den Fig. 1 und 2 ersichtlich, bildet das Molybdän und das Wolfram in der Legierung relativ große Mischkristalle aus, wohingegen die übrigen Komponenten, d. h. die genannten Oxide jeweils mit dem Wesentlichen ihrer ursprünglichen Teilchengröße in der aus einer Molybdän-Wolfram-Legierung bestehenden Mischkristallmatrix eingelagert sind (Fig. 1).

Im Längsschnitt (Fig. 2) betrachtet ergibt sich eine aufgrund der beim Rundkneten bewirkten Querschnittsverringerung und Längenvergrößerung eine entsprechende Verzerrung der Anordnungsgeometrie der Mischkristalle und der Oxidteilchen.

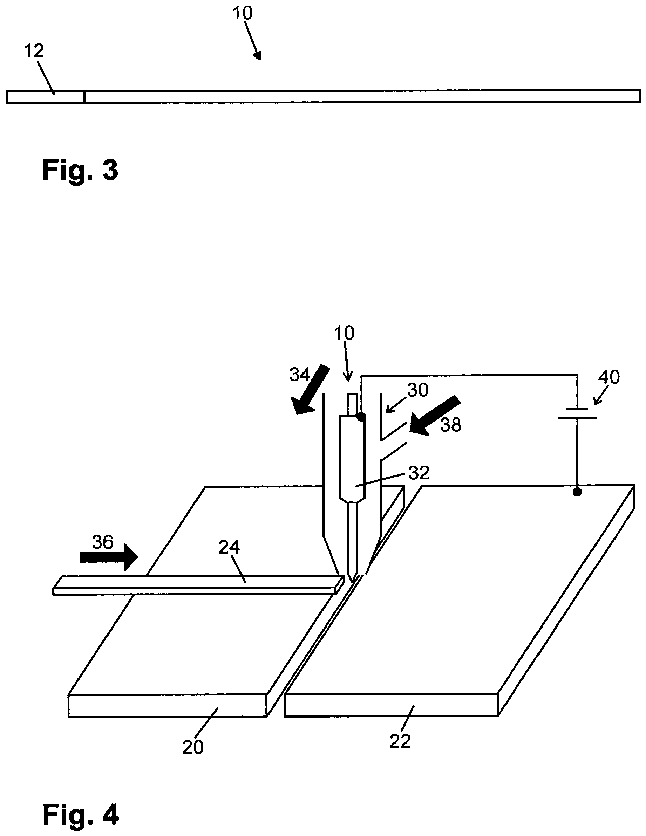

Fig. 3 zeigt eine beispielhafte Formgestaltung einer aus einer Molybdänlegierung der erfindungsgemäßen Art hergestellten und zum Lichtbogenschweißen vorgesehenen Elektrode 10.

Die Herstellung und Zusammensetzung der Legierung können z. B. so wie für das Beispiel gemäß der Fig. 1 und 2 beschrieben vorgesehen sein.

Die Elektrode 10 besitzt im dargestellten Beispiel eine Länge von 15 cm und einen Durchmesser von 3 mm.

Bevorzugt ist die Elektrode 10 mit einer z. B. deren Zusammensetzung codierenden Markierung versehen, die im dargestellten Beispiel durch eine nachträglich an einem Längsende der Elektrode 10 aufgebrachte Farbmarkierung 12 gebildet ist. Am z. B. anderen Ende kann die Elektrode 10 bereits "angespitzt" sein (oder falls nicht, erst später vom Verwender angespitzt werden).

Fig. 4 veranschaulicht die bevorzugte Verwendung einer aus der hier beschriebenen Molybdänlegierung hergestellten Elektrode 10 zum Lichtbogenschweißen (hier: WIG-Schweißprozess).

Im dargestellten Verwendungsbeispiel werden zwei Stahlplatten 20 und 22 unter Zugabe eines Zusatzstoffes 24 (hier: entsprechender Stahl) miteinander verschweißt.

Hierzu wird ein z. B. manuell geführter Schweißkopf 30 verwendet, in dessen Inneren eine metallische Klemmaufnahme 32 zur Aufnahme und elektischen Kontaktierung der Elektrode 10 angeordnet ist.

In Fig. 4 sind durch Pfeile 34, 36 und 38 eine Schweißrichtung 34, eine Zusatzstoffzufuhrrichtung 36 und eine Schutzgaszufuhr 38 angegeben.

Der zur Erzeugung des Lichtbogens zwischen dem in Fig. 4 unteren Ende der Elektrode 10 und dem "Schweißbad" (hier: Spaltbereich zwischen den Platten 20, 22) erforderliche Schweißstrom wird durch eine elektrische Stromquelle 40 geliefert, die einerseits mit den zu verschweißenden Werkstücken (hier: Metallplatten 20, 22) und andererseits mit der elektrisch leitfähigen Klemmaufnahme 32 verbunden ist.

Zur präzisen Ausbildung bzw. Anordnung des Lichtbogens ist die bis auf geringen Abstand an das Schweißbad herangeführte Elektrode 10 wie dargestellt angespitzt, bevorzugt kegelförmig mit einem Winkel im Bereich von z. B. 20 bis 50° bezüglich einer Längsrichtung der Elektrode 10 (in Fig. 4 vertikal).

Zur Minimierung einer Erosion der Elektrodenspitze im Schweißbetrieb erfolgt eine Bestromung mit Gleichstrom, wobei die Elektrode 10 bevorzugt wie dargestellt die Kathode bildet.

Im Falle bzw. nach einem ein gewisses Ausmaß übersteigenden Verschleiß der Elektrodenspitze kann diese durch Schleifen erneut angespitzt und in der Klemmaufnahme 32 entsprechend in Längsrichtung verschoben wieder eingespannt und weiter verwendet werden.

Aufgrund der besonderen Zusammensetzung der Elektrode 10 ergeben sich überraschend gute Leistungseigenschaften (z. B. Zündfähigkeit, Lichtbogenstabilität, Lebensdauer).

## Patentansprüche

1. Molybdänlegierung, bestehend aus:
- 1 bis 8 Gew.-% Oxide, ausgewählt aus der Gruppe bestehend aus Lanthanoxid, Thoriumoxid, Ceroxid, Yttriumoxid, Zirkonoxid und Terbiumoxid,
- 1 bis 20 Gew.-% Wolfram,
- 72 bis 98 Gew.-% Molybdän,
- optional einen oder mehrere weitere Zusätze oder Verunreinigungen von allenfalls 1 Gew.-%.

2. Legierung nach Anspruch 1, **dadurch gekennzeichnet, dass** sie enthält:
- 1 bis 8 Gew.-% Lanthanoxid und/oder Thoriumoxid und/oder Ceroxid,
- 0,05 bis 0,5 Gew.-% Yttriumoxid,
- 0,02 bis 1,5 Gew.-% Zirkonoxid,
- 0,01 bis 0,5 Gew.-% Terbiumoxid,
- 1 bis 20 Gew.-% Wolfram,
- 72 bis 97,9 Gew.-% Molybdän.

3. Legierung nach Anspruch 1 oder 2, **dadurch gekennzeichnet, dass** sie enthält:
- 1 bis 5 Gew.-% Lanthanoxid
- 0,05 bis 0,5 Gew.-% Yttriumoxid,
- 0,02 bis 0,5 Gew.-% Zirkonoxid,
- 0,01 bis 0,5 Gew.-% Terbiumoxid,
- 5 bis 15 Gew.-% Wolfram,
- 78,5 bis 93,9 Gew.-% Molybdän.

4. Legierung nach Anspruch 1 oder 2, **dadurch gekennzeichnet, dass** sie enthält:
- 1 bis 6 Gew.-% Ceroxid,
- 0,05 bis 0,5 Gew.-% Yttriumoxid,
- 0,02 bis 0,5 Gew.-% Zirkonoxid,
- 0,01 bis 0,5 Gew.-% Terbiumoxid,
- 5 bis 15 Gew.-% Wolfram,
- 77,5 bis 93,9 Gew.-% Molybdän.

5. Legierung nach Anspruch 1, **dadurch gekennzeichnet, dass** sie enthält:
- 2 bis 6 Gew.-% Thoriumoxid,
- 10 bis 20 Gew.-% Wolfram,
- 74 bis 88 Gew.-% Molybdän.

6. Legierung nach Anspruch 1, **dadurch gekennzeichnet, dass** sie enthält:
- 0,5 bis 3 Gew.-% Terbiumoxid,
- 15 bis 20 Gew.-% Wolfram,
- 77 bis 84,5 Gew.-% Molybdän.

7. Elektrode (10) zum Lichtbogenschweißen, insbesondere WIG-Schweißen, insbesondere in Form eines langgestreckten Stiftes, umfassend eine Molybdänlegierung nach einem der vorangehenden Ansprüche.

8. Verwendung einer Elektrode (10), insbesondere in Form eines langgestreckten Stiftes, umfassend eine Molybdänlegierung nach einem der Ansprüche 1 bis 6, zum Lichtbogenschweißen, insbesondere zum Lichtbogenschweißen unter Schutzgasatmosphäre, insbesondere zum WIG-Schweißen.

9. Verwendung nach Anspruch 8 zum manuellen Lichtbogenschweißen, insbesondere zum Lichtbogenhandschweißen unter Schutzgasatmosphäre, insbesondere zum manuellen WIG-Schweißen.

## Claims

1. A molybdenum alloy consisting of:
- 1% to 8% by weight of oxides selected from the group consisting of lanthanum oxide, thorium oxide, cerium oxide, yttrium oxide, zirconium oxide and terbium oxide,
- 1% to 20% by weight of tungsten,
- 72% to 98% by weight of molybdenum,
- optionally, at most 1% by weight of one or more further admixtures or impurities.

2. The alloy as claimed in claim 1, **characterized in that** it contains:
- 1% to 8% by weight of lanthanum oxide and/or thorium oxide and/or cerium oxide,
- 0.05% to 0.5% by weight of yttrium oxide,
- 0.02% to 1.5% by weight of zirconium oxide,
- 0.01% to 0.5% by weight of terbium oxide,
- 1% to 20% by weight of tungsten,
- 72% to 97.9% by weight of molybdenum.

3. The alloy as claimed in claim 1 or claim 2, **characterized in that** it contains:
- 1% to 5% by weight of lanthanum oxide,
- 0.05% to 0.5% by weight of yttrium oxide,
- 0.02% to 0.5% by weight of zirconium oxide,
- 0.01% to 0.5% by weight of terbium oxide,
- 5% to 15% by weight of tungsten,
- 78.5% to 93.9% by weight of molybdenum.

4. The alloy as claimed in claim 1 or claim 2, **characterized in that** it contains:
- 1% to 6% by weight of cerium oxide,
- 0.05% to 0.5% by weight of yttrium oxide,
- 0.02% to 0.5% by weight of zirconium oxide,
- 0.01% to 0.5% by weight of terbium oxide,
- 5% to 15% by weight of tungsten,
- 77.5% to 93.9% by weight of molybdenum.

5. The alloy as claimed in claim 1, **characterized in that** it contains:
- 2% to 6% by weight of thorium oxide,
- 10% to 20% by weight of tungsten,
- 74% to 88% by weight of molybdenum.

6. The alloy as claimed in claim 1, **characterized in that** it contains:
- 0.5% to 3% by weight of terbium oxide,
- 15% to 20% by weight of tungsten,
- 77% to 84.5% by weight of molybdenum.

7. An electrode (10) for arc welding, in particular TIG welding, in particular in the form of an elongate rod, comprising a molybdenum alloy as claimed in one of the preceding claims.

8. Use of an electrode (10), in particular in the form of an elongate rod, comprising a molybdenum alloy as claimed in one of claims 1 to 6, for arc welding, in particular inert gas shielded arc welding, in particular for TIG welding.

9. Use as claimed in claim 8 for manual arc welding, in particular for manual inert gas shielded arc welding, in particular for manual TIG welding.

## Revendications

1. Alliage de molybdène, constitué de :
- 1 à 8 % en poids d'oxydes, choisis dans le groupe constitué d'oxyde de lanthane, d'oxyde de thorium, d'oxyde de cérium, d'oxyde d'yttrium, d'oxyde de zirconium et d'oxyde de terbium,
- 1 à 20 % en poids de tungstène,
- 72 à 98 % en poids de molybdène,
- optionnellement, d'un ou de plusieurs autres additifs ou impuretés, ne représentant en aucun cas plus de 1 % en poids.

2. Alliage selon la revendication 1, **caractérisé en ce qu'**il contient :
- 1 à 8 % en poids d'oxyde de lanthane et/ou d'oxyde de thorium et/ou d'oxyde de cérium,
- 0,05 à 0,5 % en poids d'oxyde d'yttrium,
- 0,02 à 1,5 % en poids d'oxyde de zirconium,
- 0,01 à 0,5 % en poids d'oxyde de terbium,
- 1 à 20 % en poids de tungstène,
- 72 à 97,9 % en poids de molybdène.

3. Alliage selon les revendications 1 ou 2, **caractérisé en ce qu'**il contient :
- 1 à 5 % en poids d'oxyde de lanthane,
- 0,05 à 0,5 % en poids d'oxyde d'yttrium,
- 0,02 à 0,5 % en poids d'oxyde de zirconium,
- 0,01 à 0,5 % en poids d'oxyde de terbium,
- 5 à 15 % en poids de tungstène,
- 78,5 à 93,9 % en poids de molybdène.

4. Alliage selon les revendications 1 ou 2, **caractérisé en ce qu'**il contient :
- 1 à 6 % en poids d'oxyde de cérium,
- 0,05 à 0,5 % en poids d'oxyde d'yttrium,
- 0,02 à 0,5 % en poids d'oxyde de zirconium,
- 0,01 à 0,5 % en poids d'oxyde de terbium,
- 5 à 15 % en poids de tungstène,
- 77,5 à 93,9 % en poids de molybdène.

5. Alliage selon la revendication 1, **caractérisé en ce qu'**il contient :
- 2 à 6 % en poids d'oxyde de thorium,
- 10 à 20 % en poids de tungstène,
- 74 à 88 % en poids de molybdène.

6. Alliage selon la revendication 1, **caractérisé en ce qu'**il contient :
- 0,5 à 3 % en poids d'oxyde de terbium,
- 15 à 20 % en poids de tungstène,
- 77 à 84,5 % en poids de molybdène.

7. Electrode (10) destinée au soudage à l'arc électrique, notamment au soudage à l'arc électrique de type TIG, laquelle se présente plus particulièrement sous forme d'une goupille allongée comprenant un alliage de molybdène selon l'une des revendications précédentes.

8. Utilisation d'une électrode (10), laquelle se présente plus particulièrement sous forme d'une goupille allongée comprenant un alliage de molybdène selon l'une des revendications 1 à 6, pour réaliser un soudage à l'arc électrique, notamment un soudage à l'arc électrique sous couverture de gaz inerte, notamment un soudage de type TIG.

9. Utilisation selon la revendication 8, pour réaliser un soudage à l'arc électrique manuel, notamment un soudage à l'arc électrique manuel sous couverture de gaz inerte, notamment un soudage manuel de type TIG.
